# EUROPEAN PATENT APPLICATION

(11) **EP 1 229 518 A1**
(43) Date of publication of application: **07.08.2002**
(21) Application number: 01440021.2
(22) Date of filing: 31.01.2001
(51) Int. Cl.: G10L 15/20, G10L 21/02

(54) **Speech recognition system, and terminal, and system unit, and method**

(71) Applicant: ALCATEL, 75008 Paris (FR)
(72) Inventor: Kopp, Dieter, 75428 Illingen (DE); Walker, Michael, 73666 Baltmannsweiler 2 (DE); Noè, Bernhard, 70736 Fellbach (DE)
(74) Representative: van Bommel, Jan Peter

(57) **Abstract**

Known speech recognition systems comprise an interface in/output to be coupled to a loudspeaker/microphone and comprise a synthesizer for speech synthesis and a recognizer for speech recognition and a double talk (barge-in / cut-through) detector for detecting double talk originating from speech arriving via said microphone and announcements arriving via said synthesizer, and solve the double talk problem by switching off the announcements. This disadvantageous interrupting of (a part of) the communication can be avoided advantageously by introducing a controller coupled to said double talk detector for in dependence of said detecting adapting the speech recognition (amending probabilities, thresholds, actions, reactions, decisions etc.) and/or the speech synthesis. Preferably, an echo canceller, a noise reductor, a gain adjustor, an attenuation adjustor are used. Said system may (partly or entirely) correspond with a terminal and/or with a system unit, and can be used in a distributed speech recognition environment.

## Description

The invention relates to a speech recognition system comprising an interface in/output to be coupled to an interface and comprising a synthesizer for speech synthesis and comprising a recognizer for speech recognition and comprising a detector coupled to said interface in/output and to said synthesizer and to said recognizer for detecting double talk.

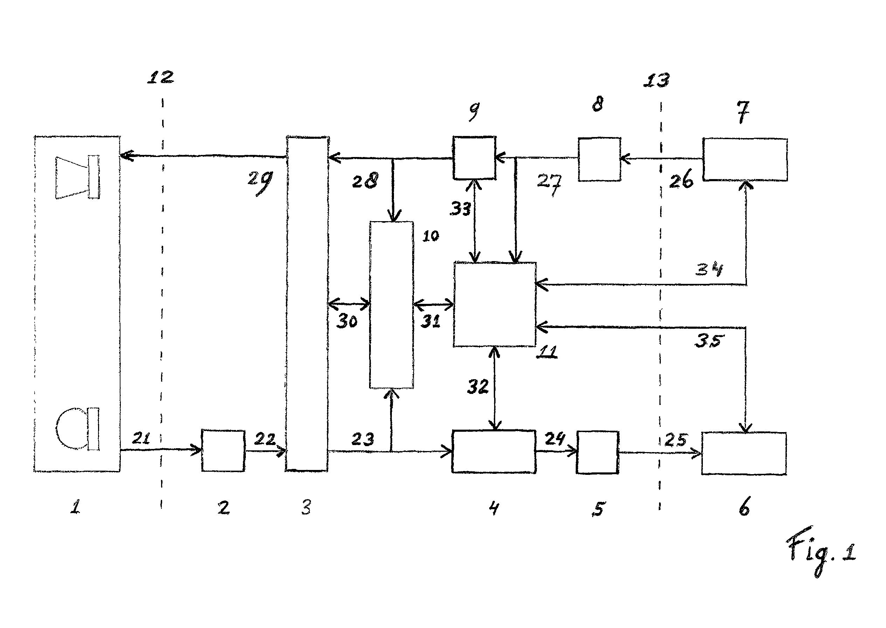

Such a speech recognition system is known from US 6,061,651, which discloses in figure 1 a handset (6 - loudspeaker and/or microphone) being said interface, a system (10) representing said synthesizer and recognizer, and a barge-in detector (18) corresponding with said detector.

Such a speech recognition system is disadvantageous, inter alia, due to solving the double talk problem by switching off the announcements. This disadvantageously interrupts (a part of) the two-way communication between user (speech) and system (announcements).

It is an object of the invention, inter alia, to provide a speech recognition system as described in the preamble, which solves the problem without interrupting the two-way communication between user and system.

Thereto, the speech recognition system according to the invention is characterised in that the speech recognition system comprises a controller coupled to said detector for in dependence of said detecting adapting the speech recognition and/or the speech synthesis.

By introducing this controller, in dependence of said detecting, the speech recognition is adapted (like amending probabilities, thresholds, actions, reactions, decisions etc. in the speech recognition process), and/or the speech synthesis is adapted (like reducing (the volume of) the announcements), thereby allowing the two-way communication to be continued.

The invention is based on the insight, inter alia, that before a two-way communication is cut off, all kinds of negotiations should have been tried (more generally, it's always better to talk than to fight).

The invention solves the problem, inter alia, of dealing with a double talk situation without (immediately) cutting of (a part of) the two-way communication.

A first embodiment of the speech recognition system according to the invention is characterised in that the speech recognition system comprises an echo canceller situated between said interface in/output and said detector.

By introducing said echo canceller, the interface (loudspeaker and/or microphone), the detector, the controller and the recognizer will have an improved performance.

It should be noted that said echo canceller can be used for (partly) solving the double talk problem. This, however, requires giant processor capacity.

A second embodiment of the speech recognition system according to the invention is characterised in that the speech recognition system comprises a noise reductor situated between said interface in/output and said detector.

By introducing said noise reductor, the interface (loudspeaker and/or microphone), the detector, the controller and the recognizer will have an improved performance.

A third embodiment of the speech recognition system according to the invention is characterised in that the speech recognition system comprises a gain adjustor situated between said interface in/output and said recognizer and coupled to said controller.

By introducing said gain adjustor, (the volume of) speech originating from the interface (microphone) and destined for the recognizer can be adjusted. When combining the adaptation of the speech recognition and/or speech synthesis with the adjusting of (the volume of) speech, the combination will be more efficient.

A fourth embodiment of the speech recognition system according the invention is characterised in that the speech recognition system comprises an attenuation adjustor situated between said interface in/output and said synthesizer and coupled to said controller.

By introducing said attenuation adjustor, (the volume of) the announcements can be decreased. This may correspond with adapting speech synthesis, but may also support the adaptation of the speech recognition and/or speech synthesis when dealing with the double talk situation. When combining the adaptation of the speech recognition with the decreasing of (the volume of) the announcements (which is a kind of adaptation of the speech synthesis), this solution is extremely efficient.

The gain adjustor and the attenuation adjustor are controlled by the controller, and will improve the performance of the speech recognition system, even in case said controller is not used for adapting the speech recognition in the recognizer. Therefore, both adjustors can each be used independently from the adapting of the speech recognition in the recognizer.

A fifth embodiment of the speech recognition system according the invention is characterised in that said recognizer is a back-end, with the recognition system comprising a front-end situated between said interface in/output and said back-end.

Such a speech recognition system can be used in a distributed speech recognition environment.

A sixth embodiment of the speech recognition system according the invention is characterised in that said synthesizer comprises a coder, with the speech recognition system comprising a decoder situated between said interface in/output and coder.

Such a speech recognition system can be used in a distributed speech recognition environment.

The invention further relates to a terminal for use in the speech recognition system defined above and comprising at least said interface in/output to be coupled to an interface and comprising said detector coupled to said interface in/output and to be coupled to said synthesizer and to said recognizer for detecting double talk.

The terminal according to the invention is characterised in that the terminal comprises said controller coupled to said detector, which controller comprises an output for in dependence of said detecting sending an adaptation signal to said recognizer for adapting the speech recognition.

So, the minimum (terminal) configuration consists of said interface in/output, said detector and said controller having said output. The maximum configuration may further consist of all parts mentioned, including the interface, the echo canceller, the noise reductor, the gain adjustor, the attenuation adjustor, the recognizer, the synthesizer, the back-end (in the recognizer), the front-end, the coder (in the synthesizer), the decoder etc. Therefore, said output (and an input coupled to said output) may be located entirely inside the terminal.

The invention yet further relates to a system unit (like for example a server or a pc or whatever kind of network unit like a switch, a router, a bridge etc.) for use in the speech recognition system defined above and comprising said synthesizer for speech synthesis and comprising said recognizer for speech recognition.

The system unit according to the invention is characterised in that the recognizer comprises an input for in dependence of said detecting receiving an adaptation signal from said controller for adapting the speech recognition and/or the speech synthesis.

So, the minimum (system unit) configuration consists of said synthesizer and said recognizer having said input. The maximum configuration may further consist of all parts mentioned (usually except the interface) including the interface in/output, the echo canceller, the noise reductor, the detector, the controller, the gain adjustor, the attenuation adjustor, the back-end (in the recognizer), the front-end, the coder (in the synthesizer), the decoder etc. Therefore, said input (and an output coupled to said input) may be located entirely inside the system-unit.

The invention also relates to a speech recognition method comprising a step of detecting double talk originating from an interface in/output to be coupled to an interface and from a synthesizer for speech synthesis.

The speech recognition method according to the invention is characterised in that the speech recognition method comprises a step of in dependence of said detecting adapting a speech recognition in a speech recognizer and/or the speech synthesis.

The invention yet also relates to a computer program product directly loadable into the internal memory of a digital computer, comprising software code portions for performing the steps defined above, when said product is run on a computer, and further yet also relates to a computer program product stored on a computer usable medium for managing speech recognition during double talk, said computer program product comprising computer readable means for detecting double talk and computer readable means for in dependence of said detecting adapting said speech recognition and/or said speech synthesis.

Therefore, each one of said detector, controller, output, echo canceller, noise reductor, gain adjustor, attenuation adjustor, recognizer, input, synthesizer, back-end (in the recognizer), front-end, coder (in the synthesizer) and decoder can be 100% hardware, 100% software or a mixture of both.

US 6,061,651 discloses an apparatus for detecting voice energy during prompting by a voice recognition system, and US 5,765,130 discloses a method and apparatus for facilitating speech barge-in in connection with voice recognition systems. US 5,991,726 discloses speech recognition devices. Neither one of these documents discloses the speech recognition system according to the invention. All references including further references cited with respect to and/or inside said references are considered to be incorporated in this patent application.

The invention will be further explained at the hand of an embodiment described with respect to a drawing, whereby
figure 1 discloses a speech recognition system according to the invention comprising a terminal according to the invention and/or comprising a system unit according to the invention.

The speech recognition system according to the invention comprises an interface 1 being a man-machine-interface 1 or mmi 1 for example comprising a loudspeaker and a microphone. An output of mmi 1 is coupled via a coupling 21 to an input of noise reductor 2, of which an output is coupled via a coupling 22 to a first input of echo canceller 3. An input of mmi 1 is coupled via a coupling 29 to a first output of echo canceller 3. Couplings 21 and 29 together form an interface in/output 12. A second output of echo canceller 3 is coupled via a coupling 23 to a first input of a detector 10 and to a first input of a gain adjustor 4. An output of gain adjustor 4 is coupled via a coupling 24 to an input of front-end 5, of which an output is coupled via a coupling 25 to a first input of a recognizer 6 which comprises a back-end. A third output of echo canceller 3 is coupled via a coupling 30 to a second input of detector 10, and a second input of echo canceller 3 is coupled via a coupling 28 to a third input of detector 10 and to an output of an attenuation adjustor 9. An in/output of detector 10 is coupled via a coupling 31 to an in/output of a controller 11, of which a first output is coupled via a coupling 32 to a second input of gain adjustor 4. A second output of controller 11 is coupled via a coupling 33 to a first input of attenuation adjustor 9, of which a second input is coupled via a coupling 27 to an input of controller 11 and to an output of a decoder 8. An input of decoder 8 is coupled via a coupling 26 to an output of synthesizer 7, which comprises a coder. An input of synthesizer 7 is coupled via a coupling 34 to a third output of detector 11, of which a fourth output is coupled via a coupling 35 to a second input of recognizer 6. Couplings 25, 26, 34 and 35 together form a recognizer/synthesizer in/output 13.

The speech recognition system according to the invention comprising the terminal according to the invention and/or the system unit according to the invention functions as follows.

According to a first embodiment, the speech recognition system comprises a terminal comprising parts situated left from recognizer/synthesizer in/output 13 and a system unit like for example a server comprising parts situated right from recognizer/synthesizer in/output 13, with couplings 25, 26, 34 and 35 for example being wired (electrical or optical) connections or being wireless (cordless or mobile) connections possibly comprising base stations and/or mobile switching centers not shown. In case of a distributed speech recognition environment, synthesizer 7 comprises a coder, and recognizer 6 comprises a back-end, otherwise they usually do not, and decoder 8 and front-end 5 usually won't be present.

Synthesizer 7 is making announcements, for example "please leave your message after the beep" or the beep itself or "if you like to ..... press 1 otherwise press 2" etc. At the same time a user near mmi 1 is talking and generating speech, for example due to not expecting said announcements. The user's speech flows via the microphone in mmi 1 and then in the form of speech signals via coupling 21 and optionally noise reductor 2 and coupling 22 and optionally echo canceller 3 and coupling 23 to detector 10, with the announcements flowing in the form of announcement signals via synthesizer 7 and coupling 26 and optionally decoder 8 and coupling 27 and optionally attenuation adjustor 9 and coupling 28 to detector 10. Detector 10 for detecting double talk (speech and announcements interfering in time - also called barge-in or cut-through situation) detects this in a way known to a person skilled in the art and described in many prior art documents, for example by measuring and/or calculating the energy of speech signals and the energy of announcement signals and comparing them with each other and/or with other information etc.

According to prior art, the results of this measuring, calculating and/or comparing comprise one or more parameter values, which then are compared with one or more thresholds, resulting in comparison results, and as a consequence the announcements are cut off or not.

According to the invention, this disadvantageous cutting off of the two-way communication can be avoided by introducing controller 11. In response to said one or more parameter values and/or in response to said comparison results, one or more parameter values and/or one or more comparison results, possibly after being processed, are sent to recognizer 6 in the form of a first adaptation signal for adapting the speech recognition process in recognizer 6 (like amending probabilities, thresholds, actions, reactions, decisions etc. in the speech recognition process). Where a human being like said user is able to deal with speech and announcements interfering in time, a machine like recognizer 6 should be told that this interfering is going on and should be told how to react to this kind of interfering.

According to a first alternative to said first embodiment, controller 11 controls gain adjustor 4 for adjusting (the volume of) the speech, for example by sending a second adaptation signal to gain adjustor 4. Independently from said sending of said first adaptation signal and/or in addition to this, the adjusting of (the volume of) the speech (like possibly increasing it) will improve the performance of the speech recognition system.

According to a second alternative to said first embodiment, controller 11 controls attenuation adjustor 9 for adjusting (the volume of) the announcements, for example by sending a third adaptation signal to attenuation adjustor 9. Independently from said sending of said first and/or second adaptation signal and/or in addition to this, the adjusting of (the volume of) the announcements (like possibly muting or decreasing it) will improve the performance of the speech recognition system.

According to a second embodiment, the speech recognition system corresponds with a terminal comprising parts situated left from recognizer/synthesizer in/output 13 and in addition comprising at least recognizer 6 situated right from recognizer/synthesizer in/output 13 (with couplings 26 and 34 in case of said terminal not comprising synthesizer 7 for example being wired (electrical or optical) connections or being wireless (cordless or mobile) connections possibly comprising base stations and/or mobile switching centers not shown). Now recognizer 6 will usually not comprise the back-end, and front-end 5 usually won't be present.

Synthesizer 7 is making announcements, for example "please leave your message after the beep" or the beep itself or "if you like to ..... press 1 otherwise press 2" etc. At the same time a user near mmi 1 is talking and generating speech, for example due to not expecting said announcements. The user's speech flows via the microphone in mmi 1 and then in the form of speech signals via coupling 21 and optionally noise reductor 2 and coupling 22 and optionally echo canceller 3 and coupling 23 to detector 10, with the announcements flowing in the form of announcement signals via synthesizer 7 and coupling 26 and optionally decoder 8 and coupling 27 and optionally attenuation adjustor 9 and coupling 28 to detector 10. Detector 10 for detecting double talk (speech and announcements interfering in time - also called barge-in or cut-through situation) detects this in a way known to a person skilled in the art and described in many prior art documents, for example by measuring and/or calculating the energy of speech signals and the energy of announcement signals and comparing them with each other and/or with other information etc. The results of this measuring, calculating and/or comparing comprise one or more parameter values, which then are compared with one or more thresholds, resulting in comparison results.

Controller 11, in response to said one or more parameter values and/or in response to said comparison results, sends one or more parameter values and/or one or more comparison results, possibly after being processed, to recognizer 6 in the form of a first adaptation signal for adapting the speech recognition process in recognizer 6 (like amending probabilities, thresholds, actions, reactions, decisions etc. in the speech recognition process).

According to a first alternative to said second embodiment, controller 11 controls gain adjustor 4 for adjusting (the volume of) the speech, for example by sending a second adaptation signal to gain adjustor 4. Independently from said sending of said first adaptation signal and/or in addition to this, the adjusting of (the volume of) the speech (like possibly increasing it) will improve the performance of the speech recognition system.

According to a second alternative to said second embodiment, controller 11 controls attenuation adjustor 9 for adjusting (the volume of) the announcements, for example by sending a third adaptation signal to attenuation adjustor 9. Independently from said sending of said first and/or second adaptation signal and/or in addition to this, the adjusting of (the volume of) the announcements (like possibly muting or decreasing it) will improve the performance of the speech recognition system.

According to a third embodiment, the speech recognition system corresponds with a system unit comprising parts situated right from interface in/output 12. Now usually recognizer 6 will not comprise the back-end, synthesizer 7 will not comprise the coder, and front-end 5 and decoder 8 won't be present. Couplings 21 and 29 will for example be wired (electrical or optical) connections or wireless (cordless or mobile) connections possibly comprising base stations and/or mobile switching centers not shown, and mmi 1 will form part of a terminal, for example.

Synthesizer 7 is making announcements, for example "please leave your message after the beep" or the beep itself or "if you like to ..... press 1 otherwise press 2" etc. At the same time a user near mmi 1 is talking and generating speech, for example due to not expecting said announcements. The user's speech flows via the microphone in mmi 1 and then in the form of speech signals via coupling 21 and optionally noise reductor 2 and coupling 22 and optionally echo canceller 3 and coupling 23 to detector 10, with the announcements flowing in the form of announcement signals via synthesizer 7 and coupling 26 and optionally decoder 8 and coupling 27 and optionally attenuation adjustor 9 and coupling 28 to detector 10. Detector 10 for detecting double talk (speech and announcements interfering in time - also called barge-in or cut-through situation) detects this in a way known to a person skilled in the art and described in many prior art documents, for example by measuring and/or calculating the energy of speech signals and the energy of announcement signals and comparing them with each other and/or with other information etc. The results of this measuring, calculating and/or comparing comprise one or more parameter values, which then are compared with one or more thresholds, resulting in comparison results.

Controller 11, in response to said one or more parameter values and/or in response to said comparison results, sends one or more parameter values and/or one or more comparison results, possibly after being processed, to recognizer 6 in the form of a first adaptation signal for adapting the speech recognition process in recognizer 6 (like amending probabilities, thresholds, actions, reactions, decisions etc. in the speech recognition process).

According to a first alternative to said third embodiment, controller 11 controls gain adjustor 4 for adjusting (the volume of) the speech, for example by sending a second adaptation signal to gain adjustor 4. Independently from said sending of said first adaptation signal and/or in addition to this, the adjusting of (the volume of) the speech (like possibly increasing it) will improve the performance of the speech recognition system.

According to a second alternative to said third embodiment, controller 11 controls attenuation adjustor 9 for adjusting (the volume of) the announcements, for example by sending a third adaptation signal to attenuation adjustor 9. Independently from said sending of said first and/or second adaptation signal and/or in addition to this, the adjusting of (the volume of) the announcements (like possibly muting or decreasing it) will improve the performance of the speech recognition system.

All embodiments are just embodiments and do not exclude other embodiments not shown and/or described. All alternatives are just alternatives and do not exclude other alternatives not shown and/or described. For example, each one of said detector, controller, output, echo canceller, noise reductor, gain adjustor, attenuation adjustor, recognizer, input, synthesizer, back-end (in the recognizer), front-end, coder (in the synthesizer) and decoder can be 100% hardware, 100% software or a mixture of both. Thereby, each input, output and coupling shown can be 100% hardware, 100% software (for example in the form of a "goto" statement) or a mixture of both.

Controller 11 could for example be realised by a table memory or an arithmetic unit or a software data file, which, in response to and in dependence of input signals arriving via couplings 27 (indicating that announcements are generated and/or which kind of announcements are generated and/or specific info defining these announcements), 31 (indicating that double talk has been detected and/or how much double talk has been detected), 32 (indicating the gain adjusted and/or info about speech signals originating from interface 1), 33 (indicating the attenuation adjusted and/or info about announcements originating from synthesizer 7), 34 (indicating that announcements are generated and/or which kind of announcements are generated and/or specific info defining these announcements) and/or 35 (indicating that speech recognition has started and/or what kind of speech recognition has started and/or specific info defining this speech recognition), generate output signals to be sent via couplings 31 (for for example adjusting the detector 10), 32 (for for example ajusting gain adjustor 4), 33 (for for example adjusting attenuation adjustor 9), 34 (for for example adapting/informing synthesizer 7) and/or 35 (for for example adapting/informing recognizer 6).

Recognizer 6 for example compares incoming signals (phonemes, words etc.) arriving via coupling 25 with stored signals, for example by calculating/taking for each incoming signal a center frequency and an average amplitude and/or an amplitude per frequency-component and/or an average power or energy and/or a power or energy per frequency-component etc., and compares these values (or corresponding probabilities) with corresponding stored values (or stored probabilities). In case one or more predefined thresholds is/are exceeded (with a minimum difference), recognition is confirmed, otherwise for example in dependence of a comparison result, recognition is done again (possibly via further values) or considered to be lost. Said adapting of recognizer 11 via adaptation signals originating from controller 11 for example comprises the adapting of said stored values, stored probabilities, thresholds, minimum differences, further values etc., including using other stored values, other stored probabilities, other thresholds, other minimum differences, other further values etc.

## Claims

1. Speech recognition system comprising an interface in/output to be coupled to an interface and comprising a synthesizer for speech synthesis and comprising a recognizer for speech recognition and comprising a detector coupled to said interface in/output and to said synthesizer and to said recognizer for detecting double talk, **characterised in that** the speech recognition system comprises a controller coupled to said detector for in dependence of said detecting adapting the speech recognition and/or the speech synthesis.

2. Speech recognition system according to claim 1, **characterised in that** the speech recognition system comprises an echo canceller situated between said interface in/output and said detector.

3. Speech recognition system according to claim 1 or 2, **characterised in that** the speech recognition system comprises a noise reductor situated between said interface in/output and said detector.

4. Speech recognition system according to claim 1, 2 or 3, **characterised in that** the speech recognition system comprises a gain adjustor situated between said interface in/output and said recognizer and coupled to said controller.

5. Speech recognition system according to claim 1, 2, 3 or 4, **characterised in that** the speech recognition system comprises an attenuation adjustor situated between said interface in/output and said synthesizer and coupled to said controller.

6. Speech recognition system according to claim 1, 2, 3, 4 or 5, **characterised in that** said recognizer is a back-end, with the recognition system comprising a front-end situated between said interface in/output and said back-end.

7. Speech recognition system according to claim 1, 2, 3, 4, 5 or 6, **characterised in that** said synthesizer comprises a coder, with the speech recognition system comprising a decoder situated between said interface in/output and coder.

8. Terminal for use in the system as claimed in any one of claims 1 to 7 and comprising at least said interface in/output to be coupled to an interface and comprising said detector coupled to said interface in/output and to be coupled to said synthesizer and to said recognizer for detecting double talk, **characterised in that** the terminal comprises said controller coupled to said detector, which controller comprises an output for in dependence of said detecting sending an adaptation signal for adapting the speech recognition and/or the speech synthesis.

9. System unit for use in the system as claimed in any one of claims 1 to 7 and comprising said synthesizer for speech synthesis and comprising said recognizer for speech recognition, **characterised in that** the system unit comprises an input for in dependence of said detecting receiving an adaptation signal from said controller for adapting the speech recognition and/or the speech synthesis.

10. Speech recognition method comprising a step of detecting double talk originating from an interface in/output to be coupled to an interface and from a synthesizer for speech synthesis, **characterised in that** the speech recognition method comprises a step of in dependence of said detecting adapting a speech recognition in a speech recognizer and/or the speech synthesis.
